(19) Europäisches Patentamt
European Patent Office
Office européen des brevets

(11) **EP 3 862 797 A1**

(12) **EUROPEAN PATENT APPLICATION**

(43) Date of publication:
**11.08.2021  Bulletin 2021/32**

(51) Int Cl.:
***G01V 99/00*** *(2009.01)*

(21) Application number: **21159883.4**

(22) Date of filing: **13.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **15.01.2014   US 201461927561 P**

(62) Document number(s) of the earlier application(s) in accordance with Art. 76 EPC:
**15737764.9 / 3 095 043**

(71) Applicant: **ConocoPhillips Company
Houston, Texas 77079 (US)**

(72) Inventor: **NGUYEN, VIET HOAI
HOUSTON, TX Texas 77007 (US)**

(74) Representative: **Simpson, Paul Christopher
ConocoPhillips (U.K.) Limited
20th Floor
Angel Court
London EC2R 7HJ (GB)**

Remarks:
This application was filed on 01-03-2021 as a divisional application to the application mentioned under INID code 62.

(54) **AUTOMATIC CARTESIAN GRIDDING WITH LOGARITHMIC REFINEMENT AT ARBITRARY LOCATIONS**

(57)      Method for generating a grid with progressive refinement in one or more one spatial dimensions to account for heterogeneity at multiple locations in the one or more spatial dimension is described. One example includes: using, as an input for a computer processor, the total number of grid cells in the one or more spatial dimensions to be gridded, and locations of features requiring grid refinement; calculating cell divisions via equations derived from geometric or logarithmic series that provide refinement at the multiple locations; and c) adjusting the cell divisions by an iterative process to obey the total number of grid cells used as input.

FIG. 1A

EP 3 862 797 A1

**FIG. 1B**

**Description**

**FIELD OF THE INVENTION**

The present invention relates generally to computer simulation of flow in subterranean formations. More particularly, but not by way of limitation, embodiments of the present invention include tools and methods for generating a grid with refinements at multiple locations for use in computer reservoir models.

**BACKGROUND OF THE INVENTION**

Reservoir simulation can be used to build a computer model of a field (e.g., model of flow in a porous media) useful for reservoir development and management. The model can be utilized to forecast production behavior of oil and gas fields, optimize reservoir development schemes, as well as evaluate distribution of remaining oil. Numerical methods (e.g., finite volume discretization, finite-difference) are often used during reservoir simulation to solve systems of nonlinear partial differential equations associated with a particular flow model. In such cases, calculation of flow at boundaries between specific cells may be required. Distribution of grid points in space and location of cell boundaries with respect to grid points can significantly affect accuracy of the numerical methods. Thus, grid generation or gridding can be a crucial element for accurate reservoir simulation. Grids enable various heterogeneous geological features to be described as representations in discrete elements, which allows simulations to be performed according to suitable numerical patterns.

Currently, there are limitations to some conventional grid generation tools. Some conventional tools may be considered inflexible and do not automatically change the grid cell size (refine) to maintain discretization accuracy around elements of heterogeneity. Some conventional tools lack scalability that allows for applications in core-scale experiments as well as full field reservoir simulations.

**BRIEF SUMMARY OF THE DISCLOSURE**

The present invention relates generally to computer simulation of flow in subterranean formations. More particularly, but not by way of limitation, embodiments of the present invention include tools and methods for generating a grid with refinements at multiple locations for use in computer reservoir models.

One example of a computer-implemented method for generating a grid with progressive refinement in one or more one spatial dimensions to account for heterogeneity at multiple locations in the one or more spatial dimension, comprising: a) using, as an input for a computer processor, the total number of grid cells in the one or more spatial dimensions to be gridded; b) calculating cell divisions via equations derived from geometric or logarithmic series that provide refinement at the multiple locations; and c) adjusting the cell divisions by an iterative process to obey the total number of grid cells used as input in step a).

One example of a non-transitory computer readable medium storing a program causing a computer to execute gridding process, the gridding process comprising: a) using as an input the total number of grid cells in the one or more spatial dimensions to be gridded; b) calculating cell divisions via equations derived from geometric or logarithmic series that provide refinement at the multiple locations; and c) adjusting the cell divisions by an iterative process to obey the total number of grid cells used as input in step a).

**BRIEF DESCRIPTION OF THE DRAWINGS**

A more complete understanding of the present invention and benefits thereof may be acquired by referring to the following description taken in conjunction with the accompanying drawings in which:

FIG. 1A illustrates an example of a grid according to one or more embodiments of the present invention. FIG. 1B illustrates modeled fluid pressure corresponding to FIG. 1A.

FIG. 2 shows comparison of two gridding models as described in Example.

FIG. 3A illustrates a generated grid according to one or more embodiments. FIG. 3B illustrates an oriented grid corresponding to FIG. 3A.

**DETAILED DESCRIPTION**

Reference will now be made in detail to embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention cover such modifications and variations that come within the scope of the invention.

The present invention provides tools and methods for generating a grid with logarithmic refinement at multiple arbitrary locations. As used herein, the term "grid" refers to a regular spatial arrangement of points that can be mapped to a particular coordinate system (e.g., Cartesian coordinates). The related term "gridding" refers to the process of converting irregularly spaced points to a regular spacing by interpolation. As used herein, the term "arbitrary location" refers to any point or any collection of points within the grid, wherein points may represent various subterranean structures such as, but not limited to, wells, natural fractures, artificial fractures (e.g., hydraulic fractures), geological features such as zones of enhanced permeabilities, and fluid contacts.

One of the goals of the present invention is to generalize logarithmic refinement to situations involving multiple arbitrary locations while being able to specify the number of grid cells as input. In some embodiments, logarithmic refinement allows smaller cells to be used around man-made or natural heterogeneity features (e.g., wells, hydraulic fractures, faults), which can be larger away from the wells. One or more embodiments of the present invention may be generalized such that the tools and methods may be applied to one-, two-, or three- dimensional problems. The generated grid can be integrated easily in 3D models. At least one advantage is usefulness in reservoir simulation situations where refinement may be required around multiple subterranean features, which may be regularly or irregularly spaced (e.g., transverse hydraulic fractures, en echelon fractures or faults). Implementation of the present invention can be simple and may be readily integrated into commercially available spreadsheet software programs such as, but not limited to, Excel sold by Microsoft® (Redmond, WA). Other programs and scripting languages may also be used. Other advantages may be apparent from the disclosure herein.

## Generation of Grid

A core routine is often used to create a grid in one dimension. This core routine can be independently applied to 2D and 3D situations to create a multi-dimensional Cartesian grid. The core routine may be used alone or in combination with other gridding schemes such as uniform spacing. Core routine can generate grid-lines located away from refinement spots at radii determined by a multiplicative progression.

Methods of the present invention include: (1) providing input values for length to be discretized (L), number of cells require ($n$), size of smallest cells at refine spots ($2*r_o$, small enough for required resolution), and list of refine spot locations; (2) merging any neighboring spots closer than a specified separation (e.g., number of cells > 3*number of refine spots); (3) calculating progression factor ($a$) by equation 6 (described later); (4) calculating number of cells surrounding each refine spot by rounding off equation 3 (described later); (5) adjusting the number of cells around each refine spot until the required number of cells n is obtained if total number of cells is different from n (go through a priority list); (6) recalculating $a$ using the number of cells after adjustment above (for each refinement spot); (7) calculating cell divisions according to equation 1 (described later); and (8) outputting cell divisions (or grid spacings if required).

Some embodiments provide a computer-implemented method for generating a grid with progressive refinement in one or more one spatial dimensions to account for heterogeneity at multiple locations in the one or more spatial dimension, comprising: using, as an input for a computer processor, the total number of grid cells in the one or more spatial dimensions to be gridded; calculating cell divisions via equations derived from geometric or logarithmic series that provide refinement at the multiple locations; and adjusting the cell divisions by an iterative process to obey the total number of grid cells used as input in step 1). Optionally, the method may further comprise: repeating steps 1-8 for a second or third dimension.

In some embodiments, the heterogeneity is natural or man-made. Heterogeneity can be characterized by high permeability features including natural fractures, hydraulic fractures, high permeability faults, or high permeability formations. The heterogeneity may be characterized by boundaries of volumes of stimulated rock volume created by hydraulic fracturing. According to some embodiments, the heterogeneity is introduced by a number of vertical or horizontal wells. Causes of heterogeneity include fluid interfaces selected from the group consisting of: water-oil interface, water-gas interface, oil-gas interface, and any combination thereof. Locations of heterogeneity may be regularly or irregularly spaced.

$$a = \left( \frac{\prod_{i=1}^{k} d_i}{r_0{}^k} \right)^{\frac{2}{n}}$$

Equations useful to the method include: a progression factor $a$ in ⟶ wherein n is total number of cells, $d_{1\ldots k}$ are coordinates of the refinement locations, k is number of multiple locations to be refined, and $r_o$ is a

$$n_i = \log_a \frac{d_i}{r_o}$$

dimension of the heterogeneity. The total number of cells in wherein $i$ is 1 to $k$.

Some embodiments provide a non-transitory computer readable medium storing a program causing a computer to execute gridding process, the gridding process comprising: using as an input the total number of grid cells in the one or more spatial dimensions to be gridded; calculating cell divisions via equations derived from geometric or logarithmic series that provide refinement at the multiple locations; and adjusting the cell divisions by an iterative process to obey the total number of grid cells used as input in step a).

The following example of a certain embodiment of the invention is given. Each example is provided by way of explanation of the invention, one of many embodiments of the invention.

**EXAMPLE**

The process of logarithmic gridding may be simplified as a problem of dividing a length of $L$ into $n$ cells with logarithmic refining at $k$ spots whose positions are given.

METHOD

Logarithmic spacing around a point, given the inner-most radius $r_o$:

$$r_i = a \cdot r_{i-1} = a^i \cdot r_0 \text{ where } i = 1...n \qquad (1)$$

Relationship between the number of spacings and the maximum radius:

$$n = \log_a (r_n/r_0) \qquad (2)$$

For the given problem, logarithmic spacing are required for k segments of half lengths $d_i$, $i = 1...k$

Number of spacings for each segment:

$$2n_i = 2 \log_a \frac{d_i}{r_0} \text{ for } i = 1..k \qquad (3)$$

The total number of spacing is specified:

$$\sum_{i=1}^{k} 2n_i = 2 \sum_{i=1}^{k} \log_a \frac{d_i}{r_0} = n \qquad (4)$$

This equation can be solved for $a$:

$$\frac{n}{2} = \log_a \frac{\prod_{i=1}^{k} d_i}{r_0{}^k} \qquad (5)$$

$$a = \left( \frac{\prod_{i=1}^{k} d_i}{r_0{}^k} \right)^{\frac{2}{n}} \qquad (6)$$

When this value of $a$ is used to calculate the spacing positions, the actual total number of spacings $\sum n_i$ will approximate $n$. Any difference is due to rounding off ($n_i$ are round numbers). This can be corrected by recalculating $a$ for each segment. However, in the end, $a$ for different segments should be similar and hence, the spacing schemes for different segments should be similar. Finally, locations of grid lines around each refinement spot are calculated by equation (1). The method is implemented as a Visual BASIC for Applications (VBA) routine. For a two-dimensional problem, the same routine can be applied to each dimension.

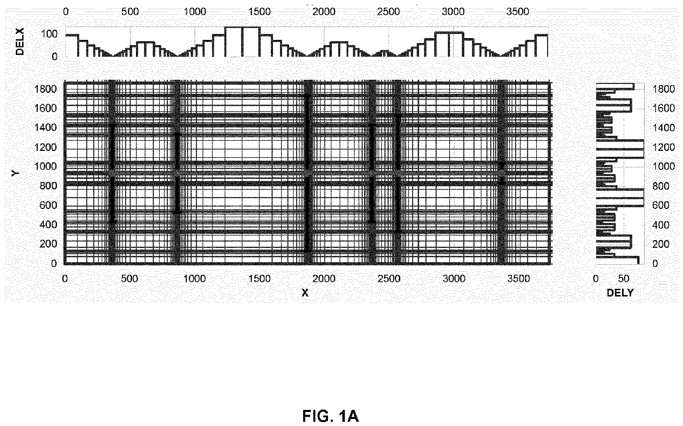

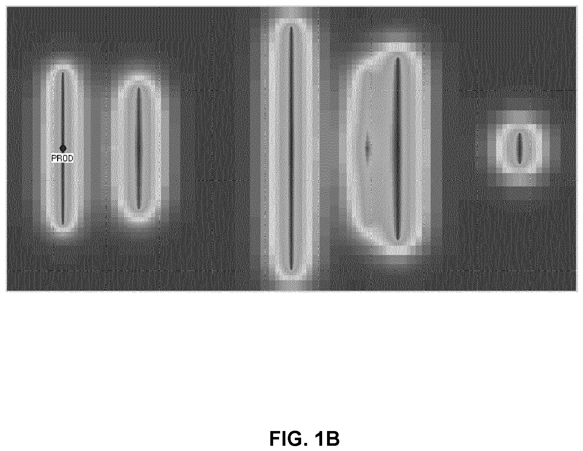

FIG. 1A illustrates an example of an X-Y grid created with refinements around each of multiple hydraulic fractures. As shown in FIG. 1A, rectangular blocks represent cells which are small around the hydraulic fractures (vertical lines) but become larger further away. The hydraulic fractures have different lengths and spacing. Top and side graphs in FIG. 1A show cell sizes in X and Y directions, respectively. The X-Y grid captured the geometry of pressure gradients around each fracture. FIG. 1B illustrates modeled fluid pressure as a result of production through the hydraulic fractures.

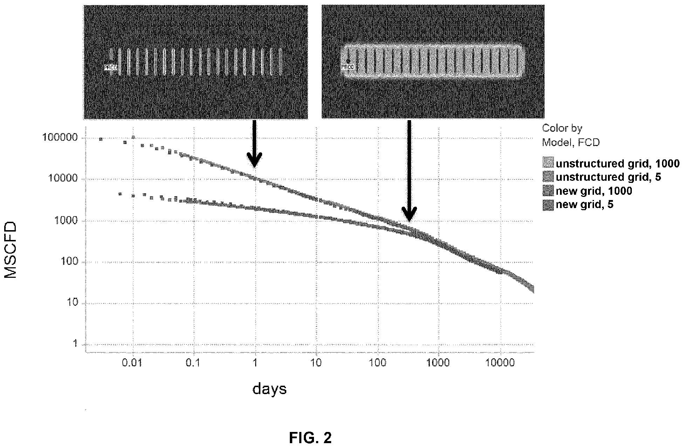

FIG. 2 compares grid refinement method (labeled "new grid") according to one or more embodiments with a non-structured gridding technique (labeled "unstructured grid"). FIG. 2 plots flow (thousands of standard cubic feet per day) as a function of time (days). Two insets show pressure distribution in the Cartesian model during linear flow (left) and boundary-dominated flow (right) periods. As shown, the new grid correlates well with the conventional method but provides increased input flexibility as well as fast computation.

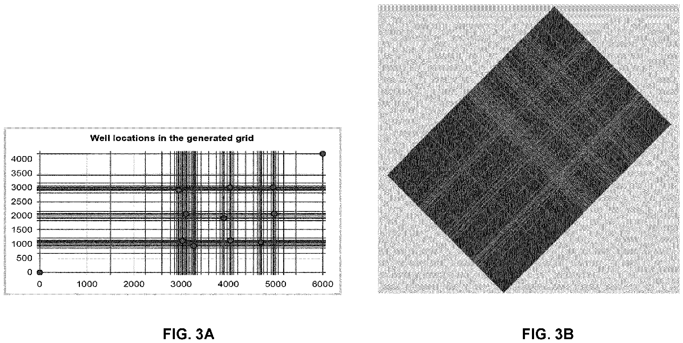

FIG. 3A illustrates another grid generated to provide refinements around well locations. As shown in FIG. 3B, the generated grid can be applied in an optimized orientation. Optimization of orientation can minimize simulation numerical errors by aligning grid with dominant flow directions.

In closing, it should be noted that the discussion of any reference is not an admission that it is prior art to the present invention, especially any reference that may have a publication date after the priority date of this application. At the same time, each and every claim below is hereby incorporated into this detailed description or specification as additional embodiments of the present invention.

Although the systems and processes described herein have been described in detail, it should be understood that various changes, substitutions, and alterations can be made without departing from the spirit and scope of the invention as defined by the following claims. Those skilled in the art may be able to study the preferred embodiments and identify other ways to practice the invention that are not exactly as described herein. It is the intent of the inventors that variations and equivalents of the invention are within the scope of the claims while the description, abstract and drawings are not to be used to limit the scope of the invention. The invention is specifically intended to be as broad as the claims below and their equivalents.

## REFERENCES

All of the references cited herein are expressly incorporated by reference. The discussion of any reference is not an admission that it is prior art to the present invention, especially any reference that may have a publication data after the priority date of this application. Incorporated references are listed again here for convenience:

1. M.R. Carlson, (2003) Practical Reservoir Simulation: Using, Assessing, and Developing Results.
2. Khalid Aziz and Antonin Settari (1979) "Petroleum Reservoir Simulation", Applied Science Publishers.

## Claims

1. A computer-implemented method for generating a grid with progressive refinement in one or more one spatial dimensions to account for heterogeneity at multiple locations in the one or more spatial dimension, comprising:

   a. using, as an input for a computer processor, the total number of grid cells in the one or more spatial dimensions to be gridded;
   b. calculating cell divisions via equations derived from geometric or logarithmic series that provide refinement at the multiple locations; and
   c. adjusting the cell divisions by an iterative process to obey the total number of grid cells used as input in step a).

2. The method of claim 1, further comprising:
   repeating steps a), b), and c) for a second or third dimension.

3. The method of claim 1, wherein the heterogeneity is natural or man-made.

4. The method of claim 1, wherein the heterogeneity is **characterized by** high permeability features including natural fractures, hydraulic fractures, high permeability faults, or high permeability formations.

5. The method of claim 1, wherein the heterogeneity is **characterized by** boundaries of volumes of stimulated rock volume created by hydraulic fracturing.

6. The method of claim 1, wherein the heterogeneity is introduced by a number of vertical or horizontal wells.

7. The method of claim 1, wherein the heterogeneity is caused by a fluid interface selected from the group consisting of: water-oil interface, water-gas interface, oil-gas interface, and any combination thereof.

8. The method of claim 1, wherein the locations of heterogeneity may be regularly or irregularly spaced.

9. The method of claim 1, wherein the equations include:

a progression factor $a$ in $a = \left(\frac{\prod_{i=1}^{k} d_i}{r_0{}^k}\right)^{\frac{2}{n}}$ wherein n is total number of cells, k is number of multiple locations to be refined, $d_{1...k}$ are coordinates of the refinement locations, and $r_o$ is a dimension of the heterogeneity.

10. The method of claim 1, wherein the equations include:

the total number of cells is $2 \sum_{i=1}^{k} \log_a \frac{d_i}{r_0}$

11. A non-transitory computer readable medium storing a program causing a computer to execute a method as claimed in any preceding claim.

FIG. 1A

**FIG. 1B**

FIG. 2

FIG. 3A

FIG. 3B

Europäisches
Patentamt

European
Patent Office

Office européen
des brevets

# EUROPEAN SEARCH REPORT

Application Number

EP 21 15 9883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SISSEL SLETTEMARK MUNDAL ET AL: "Simulation of anisotropic heterogeneous near-well flow using MPFA methods on flexible grids", COMPUTATIONAL GEOSCIENCES, KLUWER ACADEMIC PUBLISHERS, DO, vol. 14, no. 4, 14 November 2009 (2009-11-14), pages 509-525, XP019816091, ISSN: 1573-1499 * page 509, column 2, paragraph 1 - page 510, column 2, paragraph 1 * * page 512, column 1, paragraph 3 * * page 513, column 2, paragraph 2 - page 518, column 2, paragraph 3 * * page 521, column 1, paragraph 2 - page 521, column 2, paragraph 3 * * page 523, column 1, paragraph 5 - page 523, column 2, paragraph 2 * * figures 3, 15 * | 1-11 | INV. G01V99/00 |
| A | US 2009/138246 A1 (CHOW PETER [US]) 28 May 2009 (2009-05-28) * paragraphs [0008], [0012] - [0016], [0073] * | 1-11 | TECHNICAL FIELDS SEARCHED (IPC) G01V |
| A | US 2013/073268 A1 (ABACIOGLU YAFES [US] ET AL) 21 March 2013 (2013-03-21) * paragraphs [0014] - [0017], [0023] - [0026] * | 1-11 | |
| A | US 2012/136636 A1 (KLEINE ADRIAN [DE] ET AL) 31 May 2012 (2012-05-31) * paragraphs [0019], [0022] - [0024] * | 1-11 | |
| A | US 2012/000669 A1 (WU XIAO-HUI [US] ET AL) 5 January 2012 (2012-01-05) * paragraphs [0009] - [0011], [0027], [0057] * | 1-11 | |

The present search report has been drawn up for all claims

| Place of search | Date of completion of the search | Examiner |
|---|---|---|
| The Hague | 18 June 2021 | Naujoks, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 862 797 A1**

## ANNEX TO THE EUROPEAN SEARCH REPORT
## ON EUROPEAN PATENT APPLICATION NO.

EP 21 15 9883

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2021

| Patent document cited in search report | | Publication date | Patent family member(s) | | Publication date |
|---|---|---|---|---|---|
| US 2009138246 | A1 | 28-05-2009 | EP | 2068261 A1 | 10-06-2009 |
| | | | JP | 5359226 B2 | 04-12-2013 |
| | | | JP | 2009129466 A | 11-06-2009 |
| | | | KR | 20090054934 A | 01-06-2009 |
| | | | TW | 200928790 A | 01-07-2009 |
| | | | US | 2009138246 A1 | 28-05-2009 |
| US 2013073268 | A1 | 21-03-2013 | US | 2013073268 A1 | 21-03-2013 |
| | | | WO | 2013043531 A1 | 28-03-2013 |
| US 2012136636 | A1 | 31-05-2012 | CA | 2759203 A1 | 26-05-2012 |
| | | | US | 2012136636 A1 | 31-05-2012 |
| US 2012000669 | A1 | 05-01-2012 | BR | PI0714028 A2 | 18-12-2012 |
| | | | CA | 2655232 A1 | 17-01-2008 |
| | | | CN | 101484906 A | 15-07-2009 |
| | | | EP | 2038810 A2 | 25-03-2009 |
| | | | NO | 341265 B1 | 25-09-2017 |
| | | | RU | 2009104055 A | 20-08-2010 |
| | | | US | 2009306945 A1 | 10-12-2009 |
| | | | US | 2012000669 A1 | 05-01-2012 |
| | | | WO | 2008008121 A2 | 17-01-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.R. CARLSON.** *Practical Reservoir Simulation: Using, Assessing, and Developing Results,* 2003

- **KHALID AZIZ ; ANTONIN SETTARI.** Petroleum Reservoir Simulation. Applied Science Publishers, 1979